# EUROPEAN PATENT APPLICATION

(11) **EP 4 410 740 A1**
(43) Date of publication of application: **07.08.2024**
(21) Application number: 23154549.2
(22) Date of filing: 01.02.2023
(51) Int. Cl.: C01B 13/11

(54) **SEGMENTED AND MAINTAINABLE OZONE GENERATOR**

(71) Applicant: Xylem Europe GmbH, 8200 Schaffhausen (CH)
(72) Inventor: REIMER, Alexander, 32107 Bad Salzuflen (DE); FIEKENS, Ralf, 33758 Schlossholte-Stukenbrock (DE); FIETZEK, Reiner, 32049 Herford (DE)
(74) Representative: Lenzing Gerber Stute

(57) **Abstract**

The present inventions relates to an ozone generator 1 having a housing 4 which has an outer casing and a first end face 21 and a second end face 30, the outer casing and the two end faces delimiting an interior space, and the end faces each having a number of mounting openings 31 into each of which an elongate electrode assembly 20 is inserted in such a way that electrode assembly extends from one mounting opening in the first end face to an opposite mounting opening in the second end face and respectively seal the two mounting openings, wherein the electrode assemblies 20 in each case constitute an ozone generator segment 2, 3, 20, each segment 2, 3, 20 comprising a number of individual electrodes which are arranged so that a gas flow through the electrodes 20 of a segment is achievable in parallel, and that each segment is provided with a gas inlet port 2a, 3a, 20a and a gas outlet port 2b, 3b 20b.

## Description

The present invention relates to an ozone generator having the features of the preamble of claim 1 and to a method having the features of the preamble of claim 12.

Conventional commercial high capacity ozone generators comprise a large number of electrodes which are arranged inside a cooling water chamber. The electrodes are connected in parallel, electrically as well as in terms of gas flow.

In such non-segmented ozone generators, all electrodes are always in operation and the ozone capacity is limited by the number of electrodes. If there are electrode failures, the ozone capacity decreases. In addition, the electrodes are usually powered by a single power source. If the power supply fails, ozone production stops completely. In conventional ozone generators, in case that one or more electrodes are not functioning, there is a dilution of the ozone enriched product gas by the non-enriched gas flowing through the unused electrodes. In other words, there is no redundancy in conventional ozone generators provided for the event of a failure of a significant number of electrodes.

In CN 112408335 A and CN 213326731 U the idea of redundancy is generally addressed by providing several individual ozone generators.

CN 101224873 A and DE 69704990 D1 have ozone generator segments in one container, but the segments are operated feeding raw gas through one gas inlet chamber and discharging the product gas through one common gas outlet chamber. For this reason, redundancy and a so-called "hot standby" are not possible.

It is therefore an object of the present invention to provide an ozone generator with more flexibility and reliability in use, especially with intrinsic redundancy for the case of a failure of one or more electrodes

It is another object of the present invention to provide an ozone generator with more flexibility in use, namely allowing for a wider range of possible operating parameters.

These objects are achieved by an ozone generator having the features of claim 1 and by a method having the features of claim 12.

Because in an ozone generator according to the preamble of claim 1, the electrode assemblies in each case constitute an ozone generator segment, each segment comprising a number of individual electrodes which are arranged so that a parallel gas flow through the electrodes of a segment is achievable, and because each segment is provided with a first gas port and a second gas port, it is possible to individually supply the segments with feed gas and to shut off the feed gas to selected segments, if these are not functional of their ozone producing capacity is not needed at the moment.

The ozone generator may be very compact in relation to its ozone production capacity, if each individual electrode comprises a tubular outer electrode and a wire-shaped inner electrode with a tubular dielectric between the outer and the inner electrodes.

It is preferred if the ozone generator is equipped so that each electrode assembly is associated with a dedicated power supply. Thus, a segment which is shut off can also be electrically switched off, saving energy. On the other hand, individual segments can be operated at different operating points, which may allow different products to be made simultaneously. In this context, it is also advantageous if each inlet gas port is connected to a gas supply in such a way that selected electrode segments can be disconnected from or connected to the gas supply.

In a preferred embodiment, each outlet gas port is connected to a gas take-off in such a way that selected electrode segments can be separated from or connected to the gas take-off.

Gas to be enriched in ozone content can be fed in either direction through the segments if the gas ports are each arranged to be used as inlet gas ports or outlet gas ports and the gas ports are selectively connectable so that segments can be operated in series or in parallel. In this case, a preferred embodiment comprises the feature that the gas outlet port of one segment is connectable to the gas inlet port of another segment. Then, the gas can be treated twice, having the advantage e.g. of an increased ozone generating efficiency.

The ozone generator is especially robust and service-friendly when each segment is firmly connected to one end face of the ozone generator and floatingly held in the opposite end face.

A high capacity ozone generator with improved serviceability is provided if each electrode assembly comprises 2 to 200 individual electrodes, especially 20 to 100 individual electrodes.

The ozone generator is further simplified with respect to installation, operation and maintenance when all segments are water-cooled by one single, common cooling water body.

In a method of operating an ozone generator to produce ozone, separate electrode assemblies can be supplied with raw gas having different parameters, e.g. gas pressure, volumetric gas flow rate, oxygen content, and/or a different electric power supply, e.g. voltage, pulse shape or frequency, for producing individual ozone-enriched gas streams.

In a preferred method, the outflow of one segment is fed into a second segment so that the feed gas can be treated twice or even more often in the same ozone generator by utilizing different segments in succession.

Generally, in a segmented ozone generator, redundancy could be built by turning individual segments on and off. Each segment could have its own power supply. Hot standby is possible, in which the failed primary segment can be immediately replaced by another, so far inactive segment.

Since we there is one tank, only one cooling water inlet or one cooling water outlet is needed. With the result that the number of valves, instrumentation and piping could be kept small. The gas piping could also be kept simpler, since the segments are housed in one vessel. This makes the additional piping much less complex compared to a non-segmented system. There are also material savings, e.g., in the cooling jacket, since only one vessel is built instead of several ones. Cooling jacket materials can be, for example, stainless steel or plastics that are not attacked by the cooling water components.

The open cooling water chamber design offers the possibility to have enough space for the maintenance of the ozone generator pipes. For this purpose, the tube segments are floating. Individual tubes can be replaced. Almost any kind of maintenance or repair work is possible at any time.

In the following, an embodiment is explained in greater detail with reference to the drawings. They show:
- Fig. 1:: a schematic side view of an ozone generator with two segments which are arranged in a single cooling water vessel and which are operated in parallel;
- Fig. 2:: the ozone generator of fig. 1 in which the segments are operated in series;
- Fig. 3:: a perspective view of an ozone generator with three segments;
- Fig. 4:: the ozone generator of figs. 1 and 2 in a more detailed perspective view in longitudinal section;
- Fig. 5:: one end face of an ozone generator according to the previous figures showing the floating fitting of a segment in the end face and the corresponding seal, in a longitudinal section.

In the figures, identical or functionally similar features are designated with the same reference numbers.

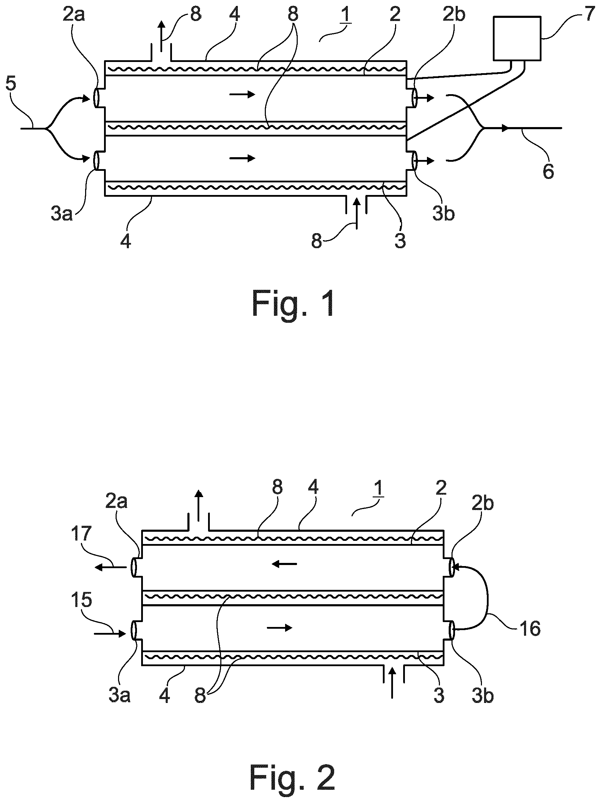

Figure 1 is a schematic side view of an ozone generator, generally assigned reference number 1, with an upper segment 2 and a lower segment 3 which segments are arranged inside a single cooling water vessel 4.

Segment 2 is provided with a first gas port 2a and a second gas port 2b. The first gas port 2a serves as a gas inlet in the shown configuration, and the second gas port 2b serves as a gas outlet or discharge port in this embodiment. Similarly, the lower segment 3 is provided with a first gas port 3a and a second gas port 3b. The first gas port 3a, like above, serves as a gas inlet in the shown configuration, and the second gas port 3b serves as a gas outlet or discharge port in this embodiment. Thus, the two segments are operated in parallel, which means that an incoming stream 5 of raw gas (like air, oxygen or oxygen enriched air) is simultaneously fed to gas ports 2a and 3a, simultaneously flows through the electrode assemblies of segments 2 and 3 and leaves the ozone generator 1 through gas ports 2b and 3b. There, the gas coming from gas ports 2b and 3b is combined into an outgoing product gas flow 6 which is enriched in ozone, provided that the electrode assemblies of segments 2 and 3 are supplied with electric power in a known manner from suitable power supplies 7, shown only in a very schematic manner.

The cooling water vessel 4 surrounds an inner volume 8, and in operation, cooling water is fed into cooling water vessel 4 to take up waste heat from the ozonisation process and to keep the temperature of the segments 2 and 3 low. This is known from the prior art. However, segments 2 and 3 are arranged in the same water body.

Fig. 2 shows the same ozone generator 1 as fig. 1, but in this case the inflow of raw gas 15 is only fed to gas port 3a of segment 3. An ozone enriched flow 16 from gas port 3b is fed to gas port 2b and enters segment 2. In this segment, the gas flow is again treated in the same ozone producing process and thus further enriched in its ozone content. The so treated gas flow exits segment 2 at gas port 2a as a gas product stream 17 having a higher ozone concentration than the intermediate gas flow 16.

Power supply 7 is not shown in this figure, like the valves and pipes that are used to control the individual gas flow to and from segments 2 and 3, as well as the cooling water flow.

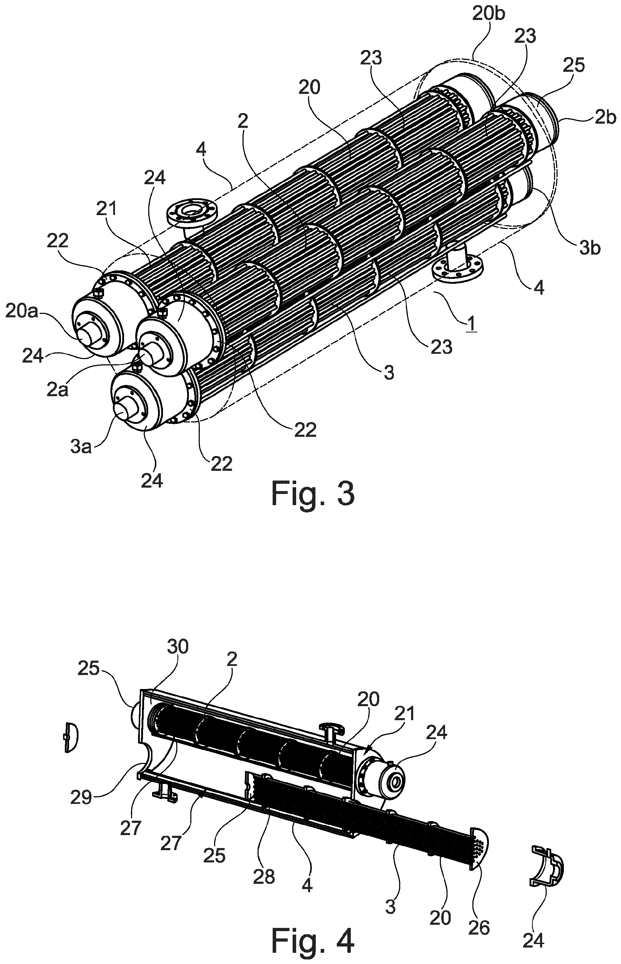

Fig. 3 shows an ozone generator with electrodes arranged in three segments 2, 3 and 20 in a perspective view. The third segment 20 has a first gas port 20a and a second gas port 20b. The cooling water vessel 4 has a first end face 21 in which the segments are mounted in flanges 22 in a watertight manner. The vessel 4 is shown in a transparent representation, so that generally designated outer electrodes 23 can be seen in this view. Each segment 2, 3 and 20 is constructed essentially identically and comprises around 100 electrodes in this embodiment. An end cap 24 is fitted to each segment which serves as a common feed chamber for all of the electrodes 20 of a segment 2, 3 or 20. Likewise, at the rear end of the ozone generator 1, there is an end cap 25 for each segment guiding the gas flow from the electrodes into the gas ports 2b, 3b and 20b.

Fig. 4 shows the assembly of fig. 3 in a longitudinal section with one segment 3 partly withdrawn from the vessel 4. It can be seen that segment 3 has the electrodes 20 fixed to a tube plate in the form of flange plate 26 which in turn is prepared to be bolted to the end face plate 21 of the vessel 4. The screws (not shown) used to fit the flange plate 26 are at the same time used to fit the end cap 24 to the assembly. Starting from the shown position of segment 3, the whole segment can be pushed into the vessel 4 toward a second end face 30 along guide rails 27, which are also provided for the other segments 2 and 20.

At the other end of segment 3, where end cap 25 is provided, the segment bears a tube plate 28 holding the ends of outer electrodes 20. Tube plate 28 has a precisely machined outer circumferential area which is suitable to floatingly engage a corresponding inner rim of an opening 29 in the other end face 30 in a watertight manner, using a seal (not shown).

The segments 2, 3 and 20 are very similar, preferably identical, and thus exchangeable. They can be withdrawn and re-fitted as described above.

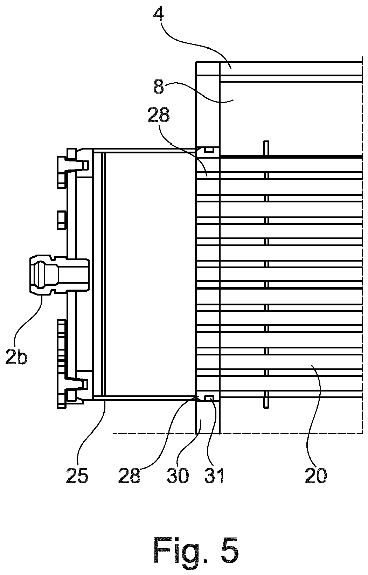

Fig. 5 finally shows the end section of segment 2 floatingly fitted inside end face plate 30 with a seal 31. the electrodes 20 are fitted to tube plate 28 as described above. Thus, the interior water body 8 inside vessel 4 is sealed off against the gas holding inside volume of end cap 25. On the other hand, the floating fit of tube plate 28 to end face plate 30 allows not only for an easy assembly of the ozone generator 1, and an easy removal and re-installation of the respective segment for maintenance purposes, but also for a relieve of thermal stress that may build up in case of the electrodes 20 expanding under the influence of elevated temperatures in operation.

The advantages of such an ozone generator are that repair work can be carried out on the tubes or they can be replaced by spare units, due to the fact that the individual segments can be removed. Maintenance may be carried out very quickly. Until now, all tubes that were not usable had to be sealed off, which always led to a loss of capacity.

There is another advantage to the design of the segmented ozone generator as described above: In conventional ozone generators, repair work on heat exchanger electrode tubes cannot be carried out after welding them to the heat exchanger vessel. Tubes that are deformed or unusable in any way, e.g. due to leaks, must be sealed. However, sealing the tubes means a loss of capacity. With the new design, the tubes can be replaced.

Each segment may have its own power supply, so each segment can be operated with its own ozone concentration and flow, so that if the gas streams after the ozone generator are not combined, different applications with different requirements can be served with one ozone generator

In conventional ozone generators, partial load operation was achieved by reducing the feed gas quantity and the energy input. With the new ozone generators, the amount of ozone required can be adjusted by switching the electrode segments on and off. This has the advantage that the entire generator does not have to be in continuous operation. The plant could always run at its optimum operating point. Electrode failures, segment failures, power supply failures can be compensated by other segments and the customer still has the desired amount of ozone available due to the redundant arrangement. In the event of a failure on one segment, the customer can continue to produce ozone. A hot stand-by system could also be used for critical applications. It is also conceivable that a customer does not initially purchase all the segments, but uses this system to secure the option of expanding the capacity of his plant at any time without requiring a new generator. In this case, the holes in the generator are closed by blind flanges.

## Claims

1. An ozone generator (1) having a housing which has an outer casing (4) and a first end face (21) and a second end face (30), the outer casing (4) and the two end faces delimiting an interior volume (8), and the end faces each having a number of mounting openings (29) into each of which an elongate electrode assembly is inserted in such a way that electrode assembly extends from one mounting opening in the first end face (21) to an opposite mounting opening (29) in the second end face (30) and respectively seal the two mounting openings, **characterized in that** the electrode assemblies (23) in each case constitute an ozone generator segment (2, 3, 20), each segment comprising a number of individual electrodes (23) which are arranged so that a gas flow through the electrodes of a segment is achievable in parallel, and that each segment (2, 3, 20) is provided with a first gas port (2a, 3a, 20a) and a second gas port (2b, 3b, 20b).

2. The ozone generator according to claim 1, **characterized in that** each individual electrode comprises a tubular outer electrode and a wire-shaped inner electrode with a tubular dielectric between the outer and the inner electrodes.

3. The ozone generator according to claim 1 or claim 2, **characterized in that** each electrode assembly is associated with a dedicated power supply (7).

4. The ozone generator according to any of the previous claims, **characterized in that** each inlet gas port (2a, 3a, 20a) is connected to a gas supply in such a way that selected electrode segments (2, 3, 20) can be disconnected from or connected to the gas supply.

5. The ozone generator according to any of the previous claims, **characterized in that** each outlet gas port (2b, 3b, 20b) is connected to a gas take-off in such a way that selected electrode segments (2, 3, 20) can be separated from or connected to the gas take-off.

6. The ozone generator according to any of the previous claims, **characterized in that** the gas ports (2a, 3a, 20a, 2b, 3b, 20b) are each arranged to be used as inlet gas ports or outlet gas ports and that the gas ports (2a, 2b, 20a, 2b, 3b, 20b) are selectively connectable so that segments (2, 3, 20) can be operated in series or in parallel.

7. The ozone generator according to any of the previous claims, **characterized in that** the gas outlet port (3b) of one segment (3) is connectable to the gas inlet port (2b) of another segment (2).

8. The ozone generator according to any of the previous claims, **characterized in that** each segment (2, 3, 20) is firmly connected to one end face (21) of the ozone generator (1) and floatingly held in the opposite end face (30).

9. The ozone generator according to any of the previous claims, **characterized in that** each electrode assembly (23) comprises 2 to 200 individual electrodes.

10. The ozone generator according to claim 9, **characterized in that** each electrode assembly (23) comprises 20 to 100 individual electrodes.

11. The ozone generator according to any of the previous claims, **characterized in that** all segments (2, 3, 20) are water-cooled by one single, common cooling water body (8).

12. A method of operating an ozone generator according to any of the previous claims, **characterized in that** separate electrode assemblies can be supplied with a different raw gas (e.g. pressure, gas flow, oxygen content) and/or a different electric power (e.g. voltage, frequency) for producing individual ozone-enriched gas streams.

13. The method of claim 12, **characterized in that** the outflow of one segment is fed into a second segment.
